(19) Europäisches Patentamt
European Patent Office
Office européen des brevets

(11) **EP 1 216 526 B1**

(12) **EUROPEAN PATENT SPECIFICATION**

(45) Date of publication and mention
of the grant of the patent:
**22.10.2008 Bulletin 2008/43**

(51) Int Cl.:
***H04B 15/00*** (2006.01)   ***H02P 7/29*** (2006.01)

(21) Application number: **00962039.4**

(86) International application number:
**PCT/US2000/040544**

(22) Date of filing: **02.08.2000**

(87) International publication number:
**WO 2001/020822 (22.03.2001 Gazette 2001/12)**

(54) **REDUCTION OF EMI THROUGH SWITCHING FREQUENCY DITHERING**

REDUZIERUNG VON ELEKTROMAGNETISCHEN STÖRUNGEN DURCH
SCHALTFREQUENZVERSCHIEBUNGEN

REDUCTION DE L'INTERFERENCE ELECTROMAGNETIQUE PAR COMMUTATION DE
FREQUENCES

(84) Designated Contracting States:
**DE FR GB IT**

(30) Priority: **17.09.1999 US 154690 P**

(43) Date of publication of application:
**26.06.2002 Bulletin 2002/26**

(73) Proprietor: **Delphi Technologies, Inc.**
**Troy, MI 48007-5052 (US)**

(72) Inventors:
• **FONDOUN, Abbas, A.**
**Dearborn, MI 48126 (US)**
• **COMSTOCK, Luke**
**Saginaw, MI 48603 (US)**
• **RAKOUTH, Heritianarisoa**
**Saginaw, MI 48603 (US)**

(74) Representative: **Denton, Michael John et al**
**Delphi France SAS**
**64 Avenue de la Plaine de France**
**ZAC Paris Nord II**
**B.P. 65059, Tremblay en France**
**95972 Roissy Charles de Gaulle Cedex (FR)**

(56) References cited:
**GB-A- 2 232 835      US-A- 4 300 081**
**US-A- 4 339 697      US-A- 5 998 945**
**US-A- 6 046 560      US-A- 6 049 473**

• **TANAKA T ET AL: "Random-switching control in DC-to-DC converters" IEEE, 26 June 1989 (1989-06-26), pages 500-507, XP010085392**

**Description**

BACKGROUND OF THE INVENTION

All commercial electrical systems must meet specific ElectroMagnetic Interference (EMI) limits. EMI solutions are usually quite expensive. In some systems 30% of the whole cost is related to EMI/EMC (compatibility) for large filters, shielding, etc. In the Electric Power Steering (EPS) system the main contributor to RF noise is the Pulse Width Modulation (PWM) operation used for current control. PWM generates narrow-band noise in the form of a spike at every integer harmonic of the PWM switching frequency. The vehicle's radio is a serious victim to narrow-band noise, since the above harmonics can appear as distinct tones at the output of the radio. This invention converts the narrow-band noise into broadband noise and reduces the peak amplitude thereof by varying the switching frequency of the PWM within a small range.
The PWM harmonic spikes have an amplitude given by:

$$(A\ t/T)\cdot|(\sin(\pi\ f_n\ t)/(\pi\ f_n\ t)| \qquad (1)$$

where A is the amplitude of the pulses, t is the PWM "on" time, $T_s$ is the PWM switching period and $f_n$ is an integer multiple of $1/T_s$, the switching frequency, $f_s$. The spectrum is a series of spikes spaced apart by $f_n$, bounded by the modulus of a sine-shaped envelope as seen in Figure 1. US 4,339,697 describes a motor control chopper apparatus and a corresponding method, wherein a random frequency of operation has a long term average deviation of substantially zero to reduce the average magnitude of the chopper apparatus generated noise signals. A controller for an electric motor comprising a voltage controlled oscillator circuit is described in GB 2 232 835, wherein the output of the oscillator circuit is transformed into a triangular waveform by a waveform generator and is applied to one input of a comparator. The other input of the comparator is supplied with an error signal signifying the difference between demanded output and actual output. In order to lessen the acoustic noise from the controller, the period and amplitude of the output of the oscillator, and hence the waveform generator, are varied by a pseudo-random sequence generator which is connected to the oscillator. The output of this comparator is a variable mark/space ratio rectangular wave.

BRIEF SUMMARY OF THE INVENTION

A method of controlling the bandwidth of electromagnetic interference generated by a pulse modulation controlled automotive motor is disclosed. The method comprises providing a controller including at least one register thereof; the controller in signal communication with the motor for controlling the motor based upon operating parameters thereof; selecting a first clock frequency; selecting a first switching frequency; initializing the at least one register, establishing thereby a prescribed at least one number; selecting a first hopping period; based upon the prescribed at least one number of the at least one register, the first clock frequency and the first hopping frequency randomly modulating the switching frequency of the pulse modulation.

BRIEF DESCRIPTION OF THE DRAWINGS

Figure 1 is a representation of the spectrum of pulse width modulation showing spikes at harmonic frequencies and a modulus of a sine-shaped envelope.
Figure 2 is a representation of the spectrum of pulse width modulation subject to frequency dithering.
Figure 3 shows the resulting tone caused by fixed frequency pulse width modulation.
Figure 4 shows the reduced volume "white noise" from 16 pulse width modulation frequencies selected pseudo-randomly every $250\mu$s.
Figure 5 is a representation of the spectrum of a pure tone broadcast.
Figure 6 is a schematic representation of an automotive motor in signal communication with a controller.
Figure 7 is a logic diagram of a pseudo-random number generator.
Figure 8 is a table of the output the pseudo-random number generator of Figure 7 in one-to-one relation with an ordered list of pulse width modulation frequencies.
Figure 9 is a first generalized flow diagram of the method of the present invention.
Figure 10 is a second generalized flow diagram of the method of the present invention.

Figure 11 is a third generalized flow diagram of the method of the present invention.

Figure 12 is a generalized schematic representation of a system for effecting the pulse width modulation of a sinusoidally excited three phase load.

Figure 13 is a representation of the narrow band noise of the motor current subject to fixed frequency pulse width modulation.

Figure 14 is a representation of the broadband noise of the motor current subject to pulse width modulation frequency dithering.

DETAILED DESCRIPTION OF THE INVENTION

The concept of PWM frequency "dithering" involves using a particular PWM switching frequency, $f_s$, only for a set number of PWM switching periods, $T_s$, before changing to another switching frequency, $f_s$, and making this "hop" periodically. Each switching frequency, $f_s$, used contributes unique harmonic content, but since it is not used constantly, the equivalent amplitude is much lower. The end result is a spectrum that is continuous and lower in peak amplitude.

The dithering process reduces the overall cost of the system. It does not require any additional components and is implemented through software. Allowing larger amplitude of RF noise while simultaneously decreasing the peak level of emissions reduces the cost needed for filtering and shielding.

There are numerous parameters involved in PWM frequency dithering, including switching frequency range, number of switching frequencies used, "hopping" frequency and the manner of frequency selection. The ideal case would encompass an infinite number of switching frequencies available (continuous distribution), changing thereamongst very quickly and selection therefrom at random. In this case the RF noise becomes pure broadband with amplitude lower than in the case of narrow band peaks.

Unfortunately, the ideal conditions are not realizable, so a compromise must be reached between system demands and broadband ideality. The EPS system is not capable of making truly random selections and it can only operate at a certain number of discrete switching frequencies. Changing the switching frequency very quickly can also cause throughput and stability problems. Generating a table of pseudo-random numbers within a range may approximate random selection of switching frequencies by ensuring that the sequence can not repeat fast enough to cause sub-modulation.

Simulation and theoretical calculations were used to predict results. However, the authoritative result is the audio output of the radio. Accurate models of coupling media and radio behavior can be derived, but the subjective nature of the human ear is not easily modeled. Therefore the real merit of any frequency dithering format is the final product, i.e., how it sounds. The following results were discovered:

1) The hopping frequency, $f_h$, is the most important factor. The "sound" of the noise is highly dependent on the hopping frequencies. Fairly white sounding noise was achieved with a hopping period of less than $500\mu s$.

2) Using as few as two switching frequencies can eliminate tones at the output of the radio (see #3 for the $\Delta f$ between them).

3) The range of frequencies from which to select should be determined by the IF bandwidth of the radio, the RF frequency range of the radio and the approximate PWM fundamental. The switching range should be big enough such that when multiplied by the harmonic number that corresponds to the radio's RF input, it exceeds the IF bandwidth. For example, for PWM near 20 kHz with an IF bandwidth of 9 kHz and a RF of 150 kHz (for European LW), the range of switching frequencies used should be greater than 9 kHz x 20 kHz/150 kHz = 1.2 kHz. Note that this is the minimum value that can be used and the maximum value is dependent on the stability of the system.

4) Increasing the number of discrete switching frequencies used improves results, with diminishing returns for very large numbers.

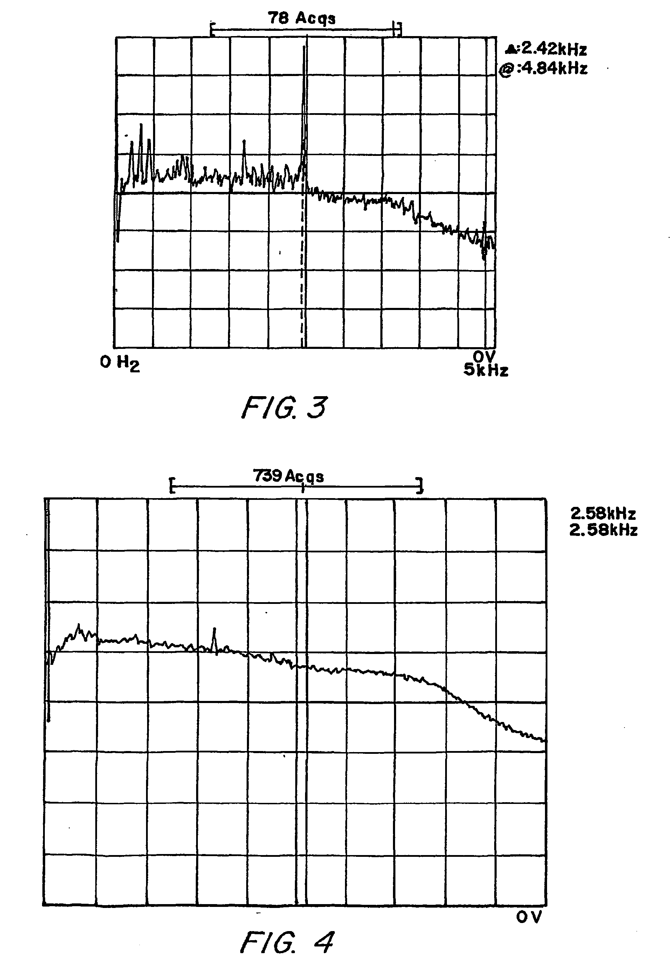

Figure 3 shows the resulting tone caused by fixed frequency PWM and Figure 4 shows the reduced volume "white noise" from 16 switching frequencies, $f_s$, selected pseudo-randomly every $250\mu s$. The dithering process reduces the overall cost of the system. It does not require any additional components and is implemented through software. Allowing larger amplitude of RF noise while simultaneously decreasing the peak level of emissions reduces the cost needed for filtering and shielding.

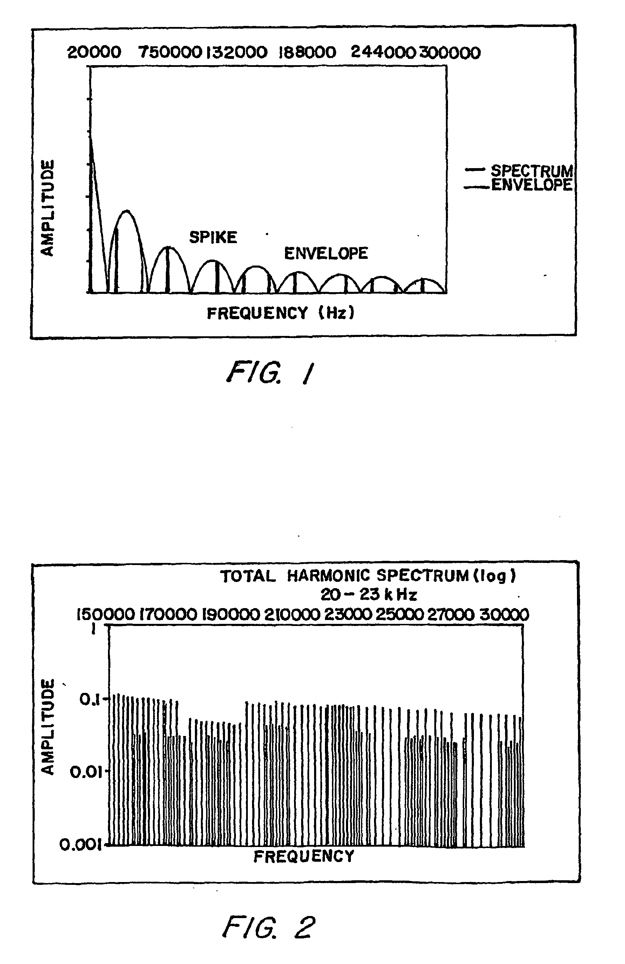

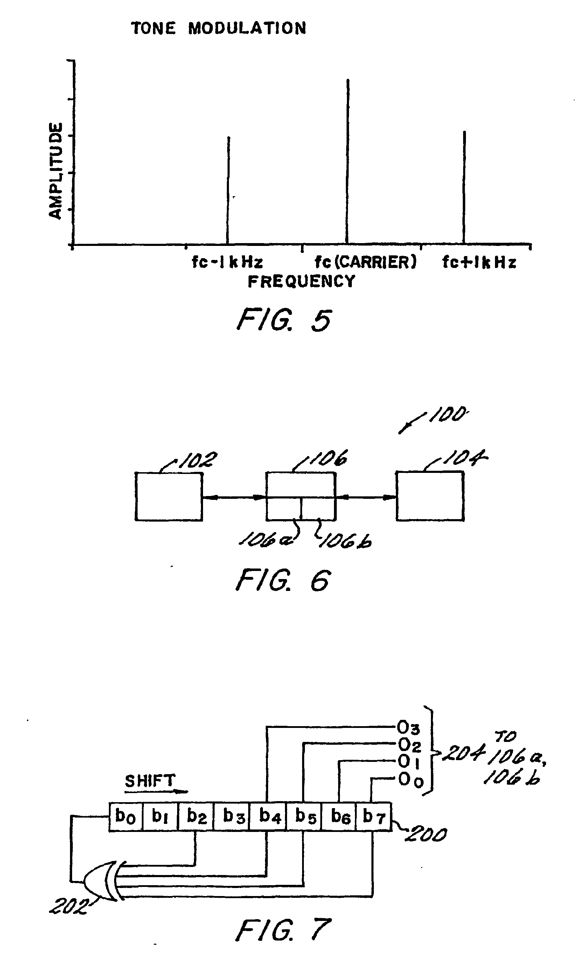

Fixed frequency (standard) PWM generates harmonics at every integer multiple of the switching frequency as seen in Equation 1 and Figure 1. Radio receivers and other electronic equipment are susceptible to this narrowband noise that is focused on specific frequencies. If an AM radio station broadcasts a pure tone, the resulting spectrum is shown in Figure 5. Since the IF bandwidth of the radio is centered at the carrier frequency, $f_c$, and the smaller spikes (sidebands) both fit within the 9 kHz bandwidth, the radio decodes the 1 kHz tone. When a radiated harmonic from the pulse width modulation is close in frequency to a radio station, the radio demodulates it as an audible tone in exactly the same fashion.

Switching frequency dithering is an alternative method to Pulse Width Modulation (PWM). The goal is to spread the emitted RF energy over a larger frequency range (broader band) so that the resulting EMI is similar to white noise. Radio receivers are especially less susceptible to this type of EMI because the noise bandwidth is much larger than the IF bandwidth. For PWM, a switching period, $T_s$, contains "on" time and "off" time. The sum of these two times is the switching period, $T_s$. Current is controlled by varying the ratio of the on and off times, i.e., the duty ratio, D. Thus:

$$T_s = t_{on} + t_{off} \text{ and}$$
$$D = t_{on}/T_s. \qquad (3)$$

In standard PWM implementation, the switching period, $T_s$, is constant and only the duty ratio, D, varies. Switching frequency dithering is the process of changing $T_s$. This is done independent of the current control scheme. For example, constant current would mean varying $T_s$ without varying D; the on time and the off time would change together.

The parameters involved in dithering implementation include:

| Parameter | Unit | Description | Examples |
|---|---|---|---|
| Hopping Frequency , $f_h$ | Hz) | How often does the switching period, $T_s$, change? | 1kHz, 2kHz, 4kHz... |
| $\Delta f_h$ | Hz) | How big is the change or hop? | 1Hz 100Hz 10kHz... |
| N | #) | How many different switching frequencies, $f_s$, are used? | 2, 25, 100, 1000. |
| Selection | | In what order will the switching frequencies, $f_s$, be used? | Sequential, pseudo-random, etc. |
| $f_{max}$-$f_{max}$ | Hz) | What is the range of switching frequencies, $f_s$, to be used? | 1Hz, 1kHz, 100kHz... |

The ideal implementation of switching frequency dithering would involve switching frequencies, $f_s$, chosen at random from a large continuous distribution, hopping thereamongst as fast as possible. The resultant spectrum would become a pure broadband with the peak level lower than the narrowband peak level.

The hopping frequency, $f_h$, should be as high as possible. The only limiting factor is the switching frequency, $f_s$. The fastest possible implementation is to only use a switching frequency, $f_s$, for one switching period, $T_s$, before "hopping" a different one. For the hopping frequency, $f_h$, to be known exactly, the switching frequencies, $f_s$, must be chosen specifically as integer multiples of the hopping frequency $f_h$. EPS is constrained to 18 kHz < $f_s$ < 30 kHz by audio and thermal issues, so a high hopping frequency limits the number of switching frequencies that can be used. Using a flexible hopping frequency solves this problem. The hop to a new switching frequency, $f_s$, can only take place at the end of a switching period, $T_s$, so the new switching frequency, $f_s$, then begins. As an example, assume the hopping period ($T_h = 1/f_h$) equals 50$\mu$s, $f_{s1}$ = 19.5 kHz and $f_{s2}$ = 21 kHz. 19.5 kHz runs for 9 periods, totaling 462$\mu$s. The 500$\mu$s mark is reached during the tenth period, so that period finishes for a total of 513$\mu$s. Pulse width modulation then happens at 21 kHz for 524$\mu$s (11 periods). Note that the hopping frequency varies around 2 kHz. As an aside, this flexible hopping frequency also helps to eliminate modulating an audible tone in components of the system.

The ideal implementation is a continuous distribution of switching frequencies (N = ∞). An electric power steering system (EPS) is capable of frequencies fitting Equation 2 where $f_s$ is the switching frequency and n is an integer.

$$f_s = 2.097 \text{ MHz }/n \quad 84 \le n \le 116 \qquad (2)$$

18.02 kHz $\le f_s \le$ 25.00 kHz

Below 18 kHz is the forbidden audio range and above 25 kHz is detrimental to thermal performance. This suggests that there are 32 potential switching frequencies, but limiting that to only about 10 through 20 improves system stability by limiting the total frequency range.

The lowest frequency band of interest for emissions determines the range of switching frequencies, $f_s$, that is required. The term broadband implies that the RF spectrum is continuous and without gaps. To accomplish this, the $n^{th}$ harmonics of the PWM fundamental frequencies must overlap with the $(n+1)^{th}$ harmonics in the frequency band of interest. The spectrum is fairly flat broadband above the frequency $f_{int}$ in the above equation. For example: with a minimum switching frequency of 18 kHz and a maximum switching frequency of 21 kHz, the spectrum becomes flat (without gaps) above about 126 kHz. Thus,

$$f_{int} > f_{max} \cdot f_{min} / ( f_{max} - f_{min}) \qquad (3)$$

The last parameter in the dithering process is the order in which the switching frequencies are used. Ideally this selection would be random, but the EPS controller cannot accomplish this. Fortunately, pseudo-random selection is adequate. Stepping through the switching frequencies in a given order causes sub-modulation in the audio range if the length of the series isn't sufficient. A pattern should take at least .5 ms before it repeats ($f_h$ < 2000 Hz). For this reason, a look-up table or pseudo-random generation is adequate.

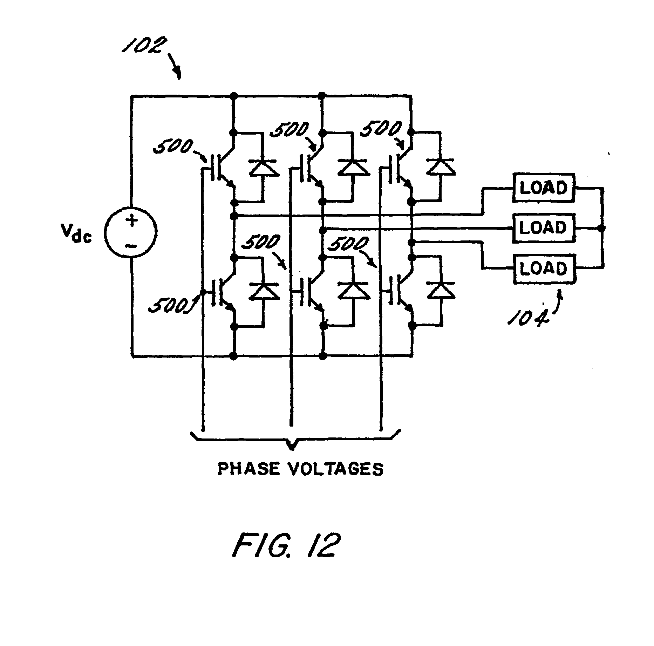

In Figure 6 the relevant parts of a system 100 for effecting the pulse width modulation frequency dithering are the EPS controller 102 and the EPS motor 104. Inside the controller 102 are power MOSFETs (shown at 500 in Figure 12 by way of exemplification) used to switch the current to the motor 104. A Brushless Motor Drive (BMD) integrated circuit (IC) 106 controls these switches in either a voltage mode reset or a current mode reset manner. Inside the BMD IC 106 are two registers 106a, 106b. The first register 106a is for setting the Duty Ratio, D, and the second register 106b is for switching period, $T_s$. These registers 106a, 106b contain numbers, $N_1$ and $N_2$ respectively which the IC must "count to" with a 2.097 MHz clock. At the beginning of a switching period, $T_s$, the proper MOSFETs 500 are activated based upon motor 104 position and desired direction of rotation. After the amount of time, $\Delta t_1 = N_1/f_{clk}$, specified by the value in the Duty Ratio register 106b has passed, these MOSFETs 500 are deactivated. The clock continues to run until the amount of time, $\Delta t_2 = N_2/f_{clk}$, specified by the switching period register 106a expires. At this point, the switching period, $T_s$, is reset and the MOSFETs 500 are reactivated. By changing these two registers 106a, 106b in proportion, the switching frequency, $f_s$, can be changed without changing the current level to the motor 104.

However, the Duty Ratio register 106b is not always the trigger that turns the MOSFETs 500 off. Sometimes the current level to the motor 104 triggers a reset. In this mode, a change of switching frequency, $f_s$, causes a small change in average (DC) current level. These changes induce audio modulation that can be heard from the motor 104. If the controller 102 changes between only a couple of switching frequencies, $f_s$, this would cause a tone of one-half the hopping frequency, $f_h$, to be heard in the motor 104. With several switching frequencies being used and a pseudo-random selection thereof, the noise from the motor 104 is somewhat white and is far less offensive.

The microprocessor of the controller 102 has serial communications with the BMD IC 106 periodically along a bus 102a. A new switching frequency command is sent to the BMD IC 106 at the end of the hopping period, $T_h$, for example, 500μs; thus updating the switching frequency register 106a. When needed, the Duty Ratio register 106b is also updated. The next switching period, $T_s$, is at a new switching frequency, $f_s$.

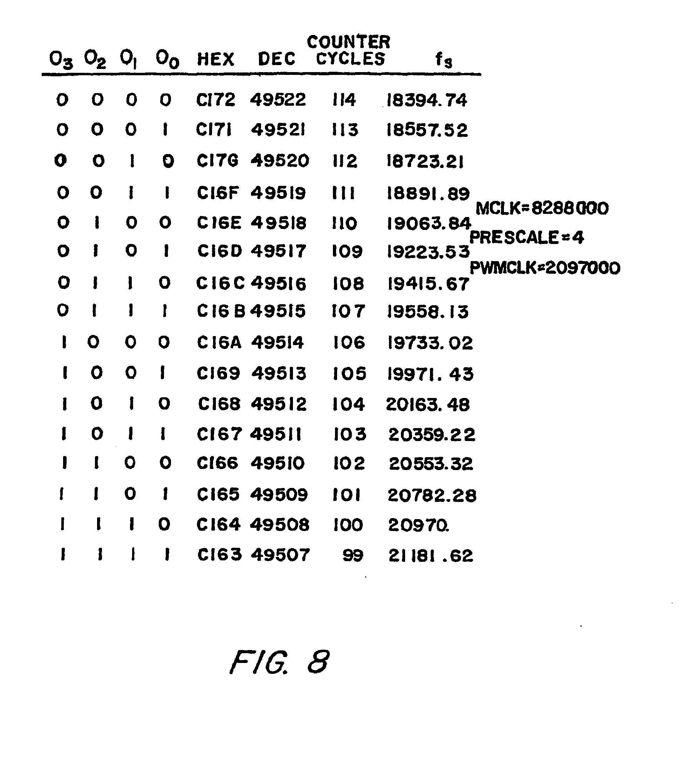

Two frequency dithering methods are provided. Both use the same switching frequencies, $f_s$, and switch between them at the same hopping frequency, $f_h$. The difference between the methods is the demand that each places on the system memory and throughput. In the first dithering method a memory contains a list of switching frequencies that are loaded sequentially into the BMD IC 106. Each value in the list is a random choice from among several possibilities. After it is created, the list is stored permanently as part of the software. In the second dithering method, a shift register 200 is combined with a modulo-two summing function 202 to form a linear feedback register as seen in Figure 7. Four of the register bits are XORed to form the input to an 8-bit register, creating a pseudo-random sequence that is 255 symbols long. Half of the contents of the shift register 200 form a 4-bit output 204 in one-to-one relation with 16 possible switching frequencies, $f_s$, as seen in the table in Figure 8. The 16 switching frequency register commands are part of the software. In Figure 8 the four leftmost columns represent the 4-bit output from the shift register 200. The column labeled "HEX" contains the hexadecimal values of switching frequencies supplied to the switching frequency register 106a. The column labeled "DEC" contains the decimal representation of the aforesaid hexadecimal values. The column labeled "Counter Cycles" contains the decimal representation of the last two digits of the hexadecimal values. The column labeled $f_s$ represents the switching frequency such that

$$2.0970 \div \text{Counter Cycles} = f_s \text{ Mhz.} \qquad (4)$$

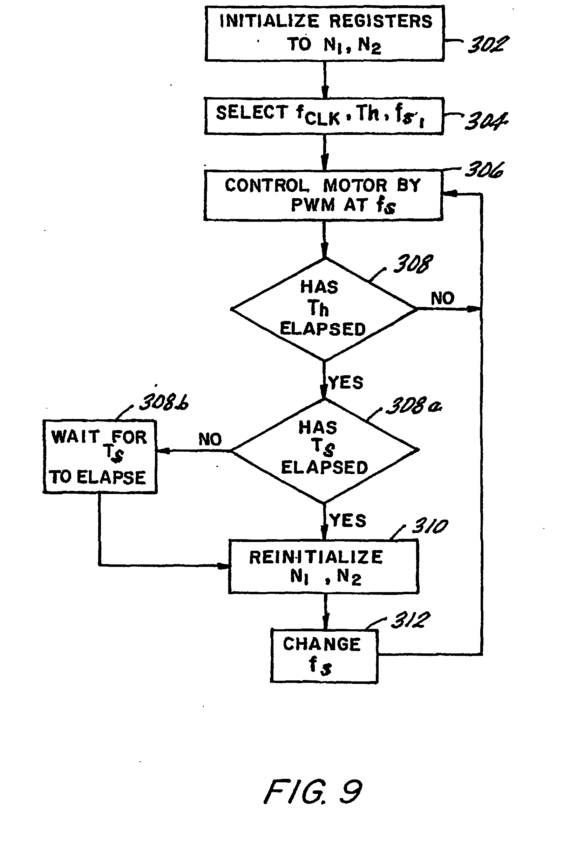

A generalized flow diagram 300 of the method of the present invention may be seen in Figure 9. In box 302 the first register 106a is initialized to a first prescribed number, $N_1$, from a finite set of prescribed numbers and the second register 106b is initialized to a second prescribed number, $N_2$, from a finite set of prescribed numbers. In block 304 a first clock frequency, $f_{clk}$, is selected, a first hopping period, $T_h$, is selected and a first switching frequency, $f_{s1}$, is selected from a finite set of switching frequencies. In block 306, based upon the prescribed first and second numbers, $N_1$ and $N_2$, the first clock frequency, $f_{clk}$, the first switching frequency, $f_{s1}$, and the first hopping period, $T_h$, the motor 104 is controlled by pulse width modulation at the first switching frequency, $f_{s1}$. In block 308, if the hopping period, $T_h$, has not elapsed, the motor 104 continues to be controlled by the pulse width modulation at the first switching frequency, $f_{s1}$. If $T_h$ has elapsed, then at block 308a, if the switching period, $T_s$, has elapsed then in block 310, the first and second registers 106a, 106b are at least pseudo-randomly reinitialized to a third prescribed number, $N_3$, and a fourth prescribed number, $N_4$, in response to a command from the microprocessor 102 thereby at least pseudo-randomly changing the first switching frequency, $f_{s1}$, to a second switching frequency, $f_{s2}$, and thus controlling the motor 104 by pulse width modulation at the second switching frequency, $f_{s2}$. In block 308b, the switching period, $T_s$, is allowed to elapse before reinitializing the first and second registers 106a, 106b. The pulse width modulation control of the motor 104 at the new switching frequency, $f_{s2}$, continues until the hopping period, $T_h$, and switching period, $T_s$, have again elapsed and upon command from the microprocessor, the third prescribed number, $N_3$, and the fourth prescribed number, $N_4$, are thereby at least pseudo-randomly changed to $N_5$ and $N_6$, thus, at least pseudo-randomly changing the second switching frequency, $f_{s2}$, to a third switching frequency, $f_{s3}$, thus controlling the motor 104 by pulse width modulation at the third switching frequency, $f_{s3}$. The aforedescribed pulse width modulation of the motor 104 at successive pseudo-random switching frequencies, $f_{si}$, continues in a cyclic fashion as the first and second registers 106a, 106b are reinitialized at the end of the hopping period, $T_h$, with the prescribed numbers, $N_i$.

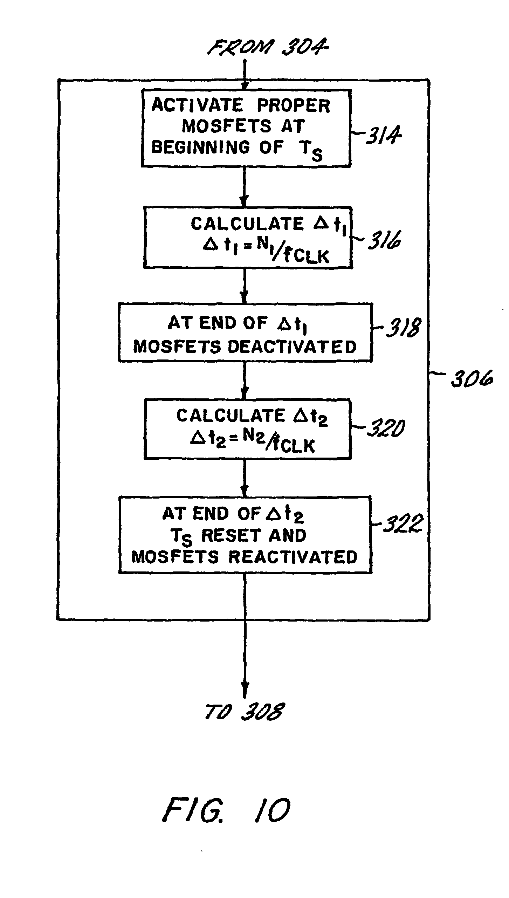

A generalized flow diagram of box 306 of Figure 9 is shown in Figure 10. At box 314 the proper MOSFETs 500 are activated at the beginning of the switching period, $T_s$. At box 316 the amount of time, $\Delta t_1 = N_1/f_{clk}$, specified by the value in the Duty Ratio register 106b is calculated. In box 318, at the end of $\Delta t_1$ the aforesaid MOSFETs 500 are deactivated. At box 320, the amount of time, $\Delta t_2 = N_2/f_{clk}$, specified by the switching period register 106a is calculated. At box 322, at the end of $\Delta t_2$, the switching period is reset and the MOSFETs 500 are reactivated.

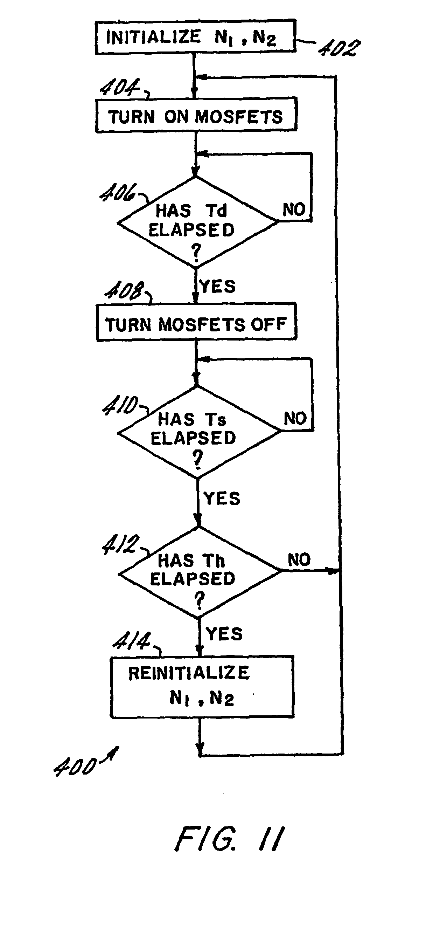

The generalized flow diagram in Figure 11 depicts a further embodiment of the method of the present invention. In box 402 the registers 106a, 106b are initialized to the first and second prescribed numbers, $N_1$ and $N_2$. In box 404 the MOSFETs 500 are turned on. In box 406, if $t_{on}$ of Equation 3 has elapsed then the MOSFETs 500 are turned off at box 408. In box 410 and box 412, if $T_s$ and $T_h$ have elapsed, then the registers 106a, 106b are reinitialized at box 414.

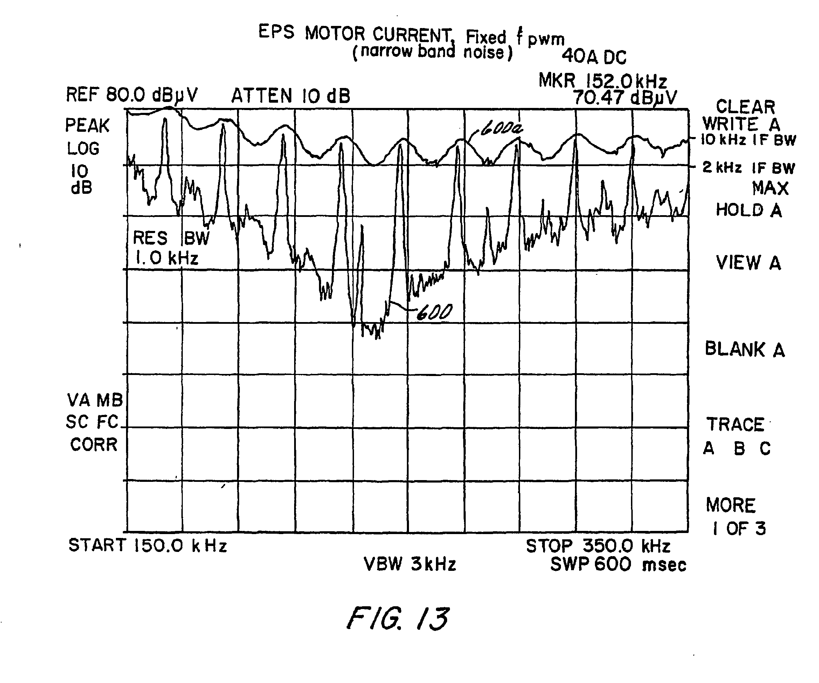

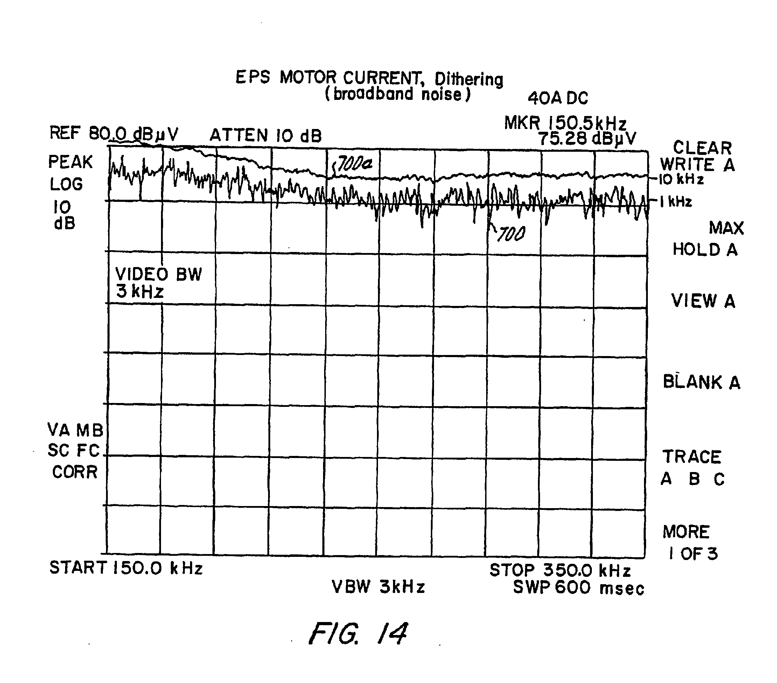

The effectiveness of the present invention may be seen with reference to Figs. 13 and 14. In Figure 13 the traces designated by the reference numeral 600 and 600a show relatively prominent spikes in signal amplitude at regular intervals of a fixed switching frequency, $f_s$, for two input frequency bandwidths. This is indicative of narrowband noise; whereas in Figure 14 the traces designated by the reference numeral 700 and 700a show a relatively smoother signal amplitude as a result of the dithering of the switching frequency, $f_s$ at the same input frequencies. This is indicative of broadband noise.

## Claims

1. A method of controlling the bandwidth of electromagnetic interference generated by a pulse width modulation controlled steering motor (104), the method comprising:

   providing a controller (102) including at least one register (106a) thereof;
   the controller (102) in signal communication with the motor (104) for controlling the motor based upon operating parameters thereof;
   selecting a first clock frequency ($f_{clk}$);
   selecting a first hopping period ($T_h$);
   selecting a first switching frequency ($f_{s1}$);
   initializing the at least one register (106a); establishing thereby a first prescribed at least one number ($N_1$);
   **characterised by**
   controlling the motor (104) by pulse width modulation at the first switching frequency ($f_{s1}$) and dependent on the first prescribed at least one number ($N_1$) of the at least one register (106a), the first clock frequency ($f_{clk}$) and the first hopping period ($T_h$);
   allowing the first hopping period ($T_h$) to elapse;
   allowing a switching period ($T_s$) for the first switching frequency ($f_{s1}$) to elapse, where the switching period ($T_s$) is shorter from the hopping period ($T_h$); and
   randomly changing the first switching frequency ($f_{s1}$) to a second switching frequency ($f_{s2}$) to control the motor (104) by pulse width modulation at the second switching frequency ($f_{s2}$).

2. The method as set forth in Claim 1 wherein randomly changing the switching frequency of the pulse width modulation includes selecting successive switching frequencies from a randomly generated list.

3. The method as set forth in Claim 1 wherein randomly changing the switching frequency of the pulse width modulation includes randomly selecting successive switching frequencies from a list.

4. The method as set forth in Claim 3 wherein randomly selecting the successive switching frequencies from a list includes selecting the successive switching frequencies from a list based upon a number generated by a pseudo-random number generator.

5. The method as set forth in Claim 4 wherein the pseudo-random number generator comprises a shift register (106a) in feedback with a logic gate generating as output therefrom an ordered list of numbers in one to one relation with an ordered list of switching frequencies.

6. The method as set forth in Claim 1 wherein randomly changing the switching frequency of the pulse width modulation includes
activating switches in the controller (102) for controlling the motor (104) at the beginning of the switching period ($T_s$);
calculating a first time interval;
at the end of the first time interval, deactivating the switches of the controller (102);
calculating a second time interval; and
at the end of the first time interval, resetting the switching period and reactivating the switches of the controller (102).

**Patentansprüche**

1. Verfahren zur Steuerung der Bandbreite elektromagnetischer Störung, die durch einen mit Pulsbreitenmodulation gesteuerten Lenkmotor (104) generiert wird, wobei das Verfahren umfasst:

Bereitstellen eines Kontrollers (102) einschließlich mindestens eines Registers (106a) davon;
den Kontroller (102) in Signalkommunikation mit dem Motor (104) zum Steuern des Motors beruhend auf dessen Betriebsparametern;
Selektieren einer ersten Taktfrequenz ($f_{clk}$);
Selektieren einer ersten Sprungperiode ($T_h$);
Selektieren einer ersten Schaltfrequenz ($f_{s1}$);
Initialisieren des mindestens einen Registers (106a); **dadurch** Erstellen einer ersten vorgeschriebenen mindestens einen Zahl ($N_1$); **gekennzeichnet durch**
Steuern des Motors (104) **durch** Pulsbreitenmodulation bei der ersten Schaltfrequenz ($f_{s1}$) und, abhängig von der ersten vorgeschriebenen mindestens einen Zahl ($N_1$) des mindestens einen Registers (106a), der ersten Taktfrequenz ($f_{clk}$) und der ersten Sprungperiode ($T_h$);
Verstreichen lassen der ersten Sprungperiode ($T_h$);
Verstreichen lassen einer Schaltperiode ($T_s$) für die erste Schaltfrequenz ($f_{s1}$), wobei die Schaltperiode ($T_s$) kürzer als die Sprungperiode ($T_h$) ist; und
Zufälliges Ändern der ersten Schaltfrequenz ($f_{s1}$) auf eine zweite Schaltfrequenz ($f_{s2}$), um den Motor (104) **durch** Pulsbreitenmodulation bei der zweiten Schaltfrequenz ($f_{s2}$) zu steuern.

2. Verfahren wie in Anspruch 1 dargelegt, wobei zufälliges Ändern der Schaltfrequenz der Pulsbreitenmodulation das Selektieren aufeinanderfolgender Schaltfrequenzen von einer zufällig generierten Liste umfasst.

3. Verfahren wie in Anspruch 1 dargelegt, wobei zufälliges Ändern der Schaltfrequenz der Pulsbreitenmodulation das zufällige Selektieren aufeinanderfolgender Schaltfrequenzen von einer Liste umfasst.

4. Verfahren wie in Anspruch 3 dargelegt, wobei das zufällige Selektieren der aufeinanderfolgenden Schaltfrequenzen von einer Liste das Selektieren der aufeinanderfolgenden Schaltfrequenzen von einer Liste umfasst, die auf einer Zahl beruht, die von einem pseudozufälligen Zahlengenerator generiert wurde.

5. Verfahren wie in Anspruch 4 dargelegt, wobei der pseudozufällige Zahlengenerator ein Schieberegister (106a) in Rückkopplung mit einem Verknüpfungsglied umfasst, das als Ausgabe davon eine geordnete Liste von Zahlen in Eins-zu-Eins-Beziehung mit einer geordneten Liste von Schaltfrequenzen generiert.

**6.** Verfahren wie in Anspruch 1 dargelegt, wobei zufälliges Ändern der Schaltfrequenz der Pulsbreitenmodulation umfasst:

Aktivieren von Schaltern im Kontroller (102) zum Steuern des Motors (104) bei
Beginn der Schaltperiode (Ts);
Berechnen eines ersten Zeitintervalls;
bei Ende des ersten Zeitintervalls, Deaktivieren der Schalter des Kontrollers (102); Berechnen eines zweiten Zeitintervalls; und
bei Ende des ersten Zeitintervalls, Rückstellen der Schaltperiode und Reaktivieren der Schalter des Kontrollers (102).

## Revendications

**1.** Procédé de commande de la largeur de bande de l'interférence électromagnétique générée par un moteur de commande (104) commandé par modulation de largeur d'impulsion, le procédé comprenant les étapes consistant à :

fournir un contrôleur (102) contenant au moins l'un de ses registres (106a) ;
le contrôleur (102) communiquant par signaux avec le moteur (104) pour commander le moteur en fonction de ses paramètres de fonctionnement ;
sélectionner une première fréquence d'horloge ($f_{clk}$) ;
sélectionner une première période de sauts de fréquence ($T_h$) ;
sélectionner une première fréquence de commutation ($f_{g1}$) ;
initialiser le ou les registre(s) (106a) ; établir par ce moyen au moins un nombre ($N_1$) prescrit en premier ;
**caractérisé par le fait que** :

l'on commande le moteur (104) par modulation de largeur d'impulsion à la première fréquence de commutation ($f_{g1}$) et en fonction du ou des nombre(s) ($N_1$) prescrits en premier du ou des registre(s) (106a), de la première fréquence d'horloge ($f_{clk}$) et de la première période de sauts de fréquence ($T_h$) ;
on laisse s'écouler la première période de sauts de fréquence ($T_h$) ;
on laisse s'écouler une période de commutation ($T_g$) pour la première fréquence de commutation ($f_{g1}$), où la période de commutation ($T_g$) est plus courte que la période de sauts de fréquence ($T_h$) ; et
on modifie aléatoirement la première fréquence de commutation ($f_{g1}$) en une seconde fréquence de commutation ($f_{g2}$) pour commander le moteur (104) par modulation de largeur d'impulsion à la seconde fréquence de commutation ($f_{g2}$).

**2.** Procédé tel que mentionné dans la revendication 1, dans lequel le changement aléatoire de la fréquence de commutation de la modulation de largeur d'impulsion comprend la sélection de fréquences de commutation successives dans une liste générée de façon aléatoire.

**3.** Procédé tel que mentionné dans la revendication 1, dans lequel le changement aléatoire de la fréquence de commutation de la modulation de largeur d'impulsion comprend la sélection de façon aléatoire de fréquences de commutation successives dans une liste.

**4.** Procédé tel que mentionné dans la revendication 3, dans lequel la sélection aléatoire des fréquences de commutation successives dans une liste comprend la sélection de façon aléatoire des fréquences de commutation successives dans une liste en fonction d'un nombre généré par un générateur de nombre pseudo-aléatoire.

**5.** Procédé tel que mentionné dans la revendication 4, dans lequel le générateur de nombre pseudo-aléatoire contient un registre à décalage (106a) en bouclage avec une porte logique générant, comme signal de sortie, une liste ordonnée de nombres selon un rapport de 1 pour 1 avec une liste ordonnée de fréquences de commutation.

**6.** Procédé tel que mentionné dans la revendication 1, dans lequel le changement aléatoire de la fréquence de commutation de la modulation de largeur d'impulsion consiste comprend les étapes consistant à :

activer les commutateurs du contrôleur (102) pour commander le moteur (104) au début de la période de commutation ($T_g$) ;
calculer un premier intervalle de temps ;
à la fin du premier intervalle de temps, désactiver les commutateurs du contrôleur (102) ;
calculer un second intervalle de temps ; et
à la fin du premier intervalle de temps, réinitialiser la période de commutation et réactiver les commutateurs du contrôleur (102).

FIG. 1

FIG. 2

**FIG. 3**

**FIG. 4**

## TONE MODULATION

FIG. 5

FIG. 6

FIG. 7

| $O_3$ | $O_2$ | $O_1$ | $O_0$ | HEX | DEC | COUNTER CYCLES | $f_s$ |
|---|---|---|---|---|---|---|---|
| 0 | 0 | 0 | 0 | C172 | 49522 | 114 | 18394.74 |
| 0 | 0 | 0 | 1 | C171 | 49521 | 113 | 18557.52 |
| 0 | 0 | 1 | 0 | C17G | 49520 | 112 | 18723.21 |
| 0 | 0 | 1 | 1 | C16F | 49519 | 111 | 18891.89 |
| 0 | 1 | 0 | 0 | C16E | 49518 | 110 | 19063.84 |
| 0 | 1 | 0 | 1 | C16D | 49517 | 109 | 19223.53 |
| 0 | 1 | 1 | 0 | C16C | 49516 | 108 | 19415.67 |
| 0 | 1 | 1 | 1 | C16B | 49515 | 107 | 19558.13 |
| 1 | 0 | 0 | 0 | C16A | 49514 | 106 | 19733.02 |
| 1 | 0 | 0 | 1 | C169 | 49513 | 105 | 19971.43 |
| 1 | 0 | 1 | 0 | C168 | 49512 | 104 | 20163.48 |
| 1 | 0 | 1 | 1 | C167 | 49511 | 103 | 20359.22 |
| 1 | 1 | 0 | 0 | C166 | 49510 | 102 | 20553.32 |
| 1 | 1 | 0 | 1 | C165 | 49509 | 101 | 20782.28 |
| 1 | 1 | 1 | 0 | C164 | 49508 | 100 | 20970. |
| 1 | 1 | 1 | 1 | C163 | 49507 | 99 | 21181.62 |

MCLK=8288000
PRESCALE=4
PWMCLK=2097000

## FIG. 8

INITIALIZE REGISTERS TO $N_1$, $N_2$ — *302*

SELECT $f_{CLK}$, Th, $f_{s_1}$ — *304*

CONTROL MOTOR BY PWM AT $f_s$ — *306*

HAS Th ELAPSED — *308*

NO

YES

WAIT FOR $T_s$ TO ELAPSE — *308b*

NO

HAS $T_s$ ELAPSED — *308a*

YES

REINITIALIZE $N_1$, $N_2$ — *310*

CHANGE $f_s$ — *312*

*FIG. 9*

14

FROM 304

ACTIVATE PROPER
MOSFETS AT
BEGINNING OF $T_S$ — 314

CALCULATE $\Delta t_1$
$\Delta t_1 = N_1/f_{CLK}$ — 316

AT END OF $\Delta t_1$
MOSFETS DEACTIVATED — 318

— 306

CALCULATE $\Delta t_2$
$\Delta t_2 = N_2/f_{CLK}$ — 320

AT END OF $\Delta t_2$
$T_S$ RESET AND
MOSFETS REACTIVATED — 322

TO 308

FIG. 10

INITIALIZE $N_1$, $N_2$ — 402

404
TURN ON MOSFETS

406 — HAS Td ELAPSED ? — NO

YES

408 — TURN MOSFETS OFF

410 — HAS Ts ELAPSED ? — NO

YES

412 — HAS Th ELAPSED ? — NO

YES

414 — REINITIALIZE $N_1$, $N_2$

400

FIG. 11

PHASE VOLTAGES

FIG. 12

EPS MOTOR CURRENT, Fixed $f_{pwm}$
(narrow band noise)   40A DC

*FIG. 13*

EP 1 216 526 B1

EPS MOTOR CURRENT, Dithering
(broadband noise)                    40A DC

REF 80.0 dBµV      ATTEN 10 dB        MKR 150.5kHz
                                          75.28 dBµV

FIG. 14

**EP 1 216 526 B1**

## REFERENCES CITED IN THE DESCRIPTION

### Patent documents cited in the description

- US 4339697 A
- GB 2232835 A